# NEW EUROPEAN PATENT SPECIFICATION

(11) **EP 0 674 939 B2**
(45) Date of publication and mention of the opposition decision: **28.03.2001**
(45) Mention of the grant of the patent: 21.10.1998
(21) Application number: 95104820.6
(22) Date of filing: 31.03.1995
(51) Int. Cl.: B01D 71/02

(54) **Process for producing an inorganic gas separation membrane**
Verfahren zur Herstellung einer anorganischen Gastrennungsmembran
Procédé de fabrication d' une membrane inorganique pour la séparation de fluides gazeux

(30) Priority: 31.03.1994 JP 8578194
(43) Date of publication of application: 04.10.1995
(73) Proprietor: NOK CORPORATION, Tokyo 105 (JP)
(72) Inventor: Namba, Takemi, Tsukuba City, Ibaraki (JP)
(74) Representative: Hansen, Bernd, Dr. Dipl.-Chem.

(56) References cited:
- WO-A-92/13631
- WO-A-93/00155
- WO-A-94/09902
- US-A- 5 258 339

## Description

### BACKGROUND OF THE INVENTION

### 1. FIELD OF THE INVENTION

The present invention relates to a process for producing a gas separation membrane, and more particularly to a process for producing a gas separation membrane effective for separating carbon dioxide.

### 2. RELATED ART

Recent increase in the carbon dioxide concentration in the atmosphere has brought about a global warming problem and control of total emission amount has been studied. To reduce the total emission amount of carbon dioxide, it is necessary to remove and recover carbon dioxide from flue gases by adsorption, absorption or separation. From the viewpoint of easy operation, low running cost, etc. removal and recovery of carbon dioxide by membrane separation is most preferable.

Up to now, organic membranes have been used as a carbon dioxide-separating membrane and are said to have a separation efficiency of about 40 ~ about 60 in terms of molar ratio CO₂/N₂ and a permeation rate of about 2×10⁻⁸ moles/m² • sec • Pa or less. However, the organic membranes are poor in resistances to chemicals, heat, etc. and regeneration of polluted membranes is difficult to conduct.

To overcome these disadvantages of organic membranes, inorganic membranes have been proposed. However, the separation efficiency of inorganic membranes is not as high as that of organic membranes. For example, a membrane prepared by laying a polymer, obtained from a mixed solution of methyl triethoxy silane, water and ethanol, which further contained a small amount of nitric acid, by hydrolysis and polycondensation, onto the outer surface of a porous α-alumina tube at 200 ∼ 300°C, is said to have a carbon oxide separation efficiency of 15.3 in terms of molar ratio CO₂/N₂ and a permeation rate of about 8×10⁻⁷ m³(STP)/m² • sec • kPa (=3.6×10⁻⁸ moles/m² • sec • Pa) [see Research Lecture Summary at the annual meeting of Chemical Engineering Society of Japan, vol.55, page 575 (1990)].
US 5,258,339 discloses the preparation of membranes carrying a Zsn-5 zeolite membrane.

### SUMMARY OF THE INVENTION

An object of the present invention is to provide a process for the production of an inorganic membrane having good resistance to chemicals and heat, and an equivalent separation efficiency to that of organic membranes, when applied to carbon dioxide separation, etc.

That is, the present invention provides a process for the production of a gas separation membrane, which comprises a porous inorganic substrate and a layer of synthetic zeolite ZSM-5, formed on the substrate.

The present gas separation membrane is produced by hermetically placing an aqueous mixture of a SiO₂ sol as a silica source prepared by hydrolysis of tetra(lower alkoxy) silane in the presence of an acid catalyst, an alumina source, an alkali metal source and a tetrapropylammonium salt as a crystallizing agent into a pressure vessel together with a porous inorganic substrate, and keeping the pressure vessel at a hydrothermal synthesis temperature of 160 to 200°C, thereby forming a layer of synthetic zeolite ZSM-5 on the porous inorganic substrate.

As the porous inorganic substrate, porous ceramics such as Al₂O₃, Y₂O₃, MgO, SiO₂, Si₃N₄, ZrO₂, etc. in general, preferably porous Al₂O₃, are used in the form of tubes, hollow fibers, plates, etc. and have an average pore size of about 0.1 to about 10µm, preferably about 0.1 to about 2µm.

These porous inorganic substrate are hermetically placed into a pressure vessel together with a mother liquor for synthesis composed of the following aqueous mixture and subjected to hydrothermal synthesis conditions.

An aqueous mixture (sol or gel) constituting the mother liquor for synthesis is composed of a silica source, an alumina source, an alkali metal source, a crystallizing agent and water. Tetra(lower alkoxy) silane is used as a silica source and includes tetramethoxy silane, tetraethoxy silane, tetraisopropoxy silane, tetra-n-butoxy silane, where tetraethoxy silane is preferable. They are hydrolyzed in the presence of an acid catalyst to form SiO₂. Alumina source for use in the present invention includes sodium aluminate, aluminum nitrate, aluminum sulfate, alumina powder, etc., and usually sodium aluminate is used to serve as an alkali metal source at the same time. Alkali metal source for use in the present invention includes sodium hydroxide and potassium hydroxide. Crystallizing agent (structuring agent) for use in the present invention includes tetrapropylammonium salts or tetrapropylammonium hydroxide, and usually tetrapropylammonium bromide is used.

Usually an aqueous mixture having the following composition (in molar ratio) is used as the mother liquor for synthesis composed of the above-mentioned components and water.
SiO₂/Al₂O₃ = about 30 ∼ about 1,000 (preferably about 60 ∼ about 400)
Na₂O/SiO₂ = about 0.1 ∼ about 1.0 (preferably about 0.2 ∼ about 0.5)
Crystallizing agent/SiO₂ = about 0.05 ∼ about 0.5 (preferably about 0.05 ∼ about 0.2)
H₂O/SiO₂ = about 70 ∼ about 400 (preferably about 80 ∼ about 300).

The mother liquor for synthesis composed of these components and water, i.e. aqueous mixture, can be prepared, for example, in the following procedure:
(1) Tetra(lower alkoxy) silane is added to an aqueous solution containing an acid catalyst such as nitric acid, hydrochloric acid, or the like to carry out hydrolysis reaction with stirring, thereby forming a SiO₂ sol.
(2) An aqueous solution containing an alkali metal source is added to the resulting hydrolyzed solution.
(3) An aqueous solution containing a crystallizing agent is added to an aqueous solution containing an alumina source with stirring.
(4) The solution prepared in (3) is added to the solution prepared in (2), followed by stirring at room temperature for about 6 to about 24 hours.

The aqueous mixture constituting the mother liquor for synthesis is hermetically placed into a pressure vessel such as an autoclave having a Teflon inner cylinder together with the said porous inorganic substrate, and the entire pressure vessel is uniformly heated, for example, in an oven or the like to maintain it a hydrothermal synthesis temperature of 160 ∼ 200°C for about 24 to about 60 hours, whereby synthetic zeolite ZSM-5 can be formed on the porous inorganic substrate.

The porous inorganic substrate with a synthetic zeolite ZSM-5 thin film formed thereon can be effectively used as a carbon dioxide separation membrane, etc. in the form of modulated tubular membrane, modulated hollow fiber membrane or plate-shaped membrane. In case of using it as a carbon dioxide separation membrane, it has a separation efficiency as high as 53 ∼ 56 in terms of molar ratio CO₂/N₂ and a permeation rate as high as about 1.0 ~ 1.7×10⁻⁷ moles/m² • sec • Pa at room temperature. That is, the separation efficiency is equivalent to that of the organic membrane, whereas the permeation rate is about 5 ∼ about 8.5 times or more as high as that of the organic membrane. Furthermore, the separation efficiency is about 3.5 times or more as high as that of the inorganic membrane mentioned before, and even the permeation rate is about 1.3 ~ about 2.1 times as high as that of the inorganic membrane as mentioned before.

By forming a synthetic zeolite ZSM-5 thin film on a porous inorganic substrate, a carbon dioxide separation membrane having good resistances to chemicals and heat, an equivalent separation efficiency to that of the organic membrane and a considerably improved permeation rate, as compared with the organic membrane, can be obtained. The present carbon dioxide separation membrane can effectively separate carbon dioxide from various gases containing carbon dioxide.

A gas separation membrane with a synthetic zeolite ZSM-5 thin film, having a good separation efficiency can be obtained only when tetra(lower alkoxy) silane is used as a silica source for the aqueous mixture destined to the hydrothermal synthesis. That is, when colloidal silica or sodium silicate (including water glass) is used as the silica source, a synthetic zeolite thin film can be formed on a porous inorganic substrate, but has a low separation efficiency, when used as a gas separation membrane.

### PREFERRED EMBODIMENTS OF THE INVENTION

The present invention will be described in detail below, referring to Example and Comparative Examples.

### EXAMPLE

A small amount of water was added to tetraethoxy silane and the resulting mixture was hydrolyzed in the presence of nitric acid. Then, an aqueous solution of sodium hydroxide was added to the hydrolyzed mixture with stirring. Then, a mixture of an aqueous sodium aluminate solution and an aqueous tetrapropylammonium bromide (TPABr) solution was added thereto, followed by stirring at room temperature for 12 hours.

Molar ratios of components of the aqueous mixture constituting a mother liquor for synthesis are as follows, in terms of oxides:
SiO₂/Al₂O₃ = 102
Na₂O/SiO₂ = 0.23
TPABr/SiO₂ = 0.10
H₂O/SiO₂ = 200

The thus prepared mother liquor for synthesis was hermetically placed into an autoclave together with a porous hollow alumina fiber (average pore size: about 1µm, outer diameter: about 2mm, inner diameter: about 1.6mm), and then the autoclave was placed into an oven and kept therein at 180°C for 36 hours, thereby carrying out hydrothermal synthesis. It was found by SEM observation and X-ray diffraction that a synthetic zeolite layer of ZSM-5 was formed on the hollow alumina fiber.

Gas permeation rates of the thus prepared hollow alumina fiber with the synthetic zeolite ZSM-5 layer were measured each for pure CO₂ and N₂ gases at 20°C and 30°C, by passing each of the gases therethrough, while making a pressure difference between the up stream side and the down stream side of the hollow alumina fiber 0.05 MPa, and separation efficiency in terms of molar ratio CO₂/N₂ was calculated from the measurements. The results are shown in the followimg Table 1.

**Table 1**

| Measurement temperature | Gas permeation rate (moles/m² • sec • Pa) | | Separation efficiency (CO₂/N₂) |
|---|---|---|---|
| | CO₂ | N₂ | |
| 20°C | 1.13×10⁻⁷ | 2.01×10⁻⁹ | 56.2 |
| 30°C | 1.68×10⁻⁷ | 3.19×10⁻⁹ | 52.7 |

Furthermore, gas permeation rates of the hollow alumina fiber with the synthetic zeolite ZSM-5 layer thereon were also measured each for pure H₂ and O₂ gases at 30°C. It was found that H₂ permeation rate was 4.20×10⁻⁹ moles/m² • sec • Pa and O₂ permeation rate was 4.00×10⁻⁹ moles/m² • sec • Pa. Furthermore, CO₂/H₂ separation efficiency was found to be as high as 40.0 and CO₂/O₂ separation efficiency was also found to be as high as 42.0. It was confirmed from these results that the present gas separation membrane could effectively separate CO₂ from various gas mixture containing CO₂.

### COMPARATIVE EXAMPLES 1 AND 2

Hollow alumina fiber with a synthetic zeolite layer thereon were formed in the same manner as in Example, except that water glass (Comparative Example 1) and colloidal silica (Comparative Example 2) were used in the same molar ratio as in Example as SiO₂. Permeation rates and separation efficiencies of the thus obtained hollow alumina fiber with a synthetic zeolite layer were measured for pure CO₂ and N₂ gases. The results are shown in the following Table 2.

**Table 2**

| Comparative Example | Measurement temperature | CO₂ permeation rate (moles/m² • sec • Pa) | Separation efficiency (CO₂/N₂) |
|---|---|---|---|
| 1 | 20°C | 1.76×10⁻⁸ | 13.4 |
| | 30°C | 2.00×10⁻⁸ | 11.8 |
| 2 | 20°C | 6.21×10⁻⁹ | 18.2 |
| | 30°C | 5.58×10⁻⁹ | 15.8 |

## Claims

1. A process for producing a gas separation membrane, which comprises hermetically placing an aqueous mixture of a Si0₂ sol as a silica source prepared by hydrolysis of tetra(lower alkoxy) silane in the presence of an acid catalyst, an alumina source, an alkali metal source and a tetrapropylammonium salt as a crystallizing agent into a pressure vessel together with a porous inorganic substrate and keeping the pressure vessel at a hydrothermal synthesis temperature of 160 to 200°C, thereby forming a layer of synthetic zeolite ZSM-5 on the porous inorganic substrate.

2. A process according to claim 1, wherein the alumina source is sodium aluminate, aluminum nitrate, aluminum sulfate, or alumina powder.

3. A process according to claim 1, wherein the alkali metal source is an alkali metal hydroxide.

4. A process according to claim 1, wherein the crystallizing agent is a tetrapropylammonium salt or tetrapropylammonium hydroxide.

5. A process according to claim 1, wherein sodium aluminate is used both as the alumina source and as the alkali metal source.

6. A process according to claim 1, wherein the aqueous mixture has the following composition in molar ratios:
SiO₂/Al₂O₃ = about 30 ∼ about 1,000
Na₂O/SiO₂ = about 0.1 ∼ about 1.0
Crystallizing agent/SiO₂ = about 0.05 ∼ about 0.5
H₂O/SiO₂ = about 70 ∼ about 400.

7. A process according to claim 1, wherein the aqueous mixture has the following composition in molar ratios:
SiO₂/Al₂O₃ = about 60 ∼ about 400
Na₂O/SiO₂ = about 0.2 ∼ about 0.5
Crystallizing agent/SiO₂ = about 0.05 ∼ about 0.2
H₂O/SiO₂ = about 80 ∼ about 300.

8. A process according to claim 1, wherein the aqueous mixture is a mixture prepared by (1) adding tetra(lower alkoxy)silane to an aqueous solution containing an acid catalyst to carry out hydrolysis reaction with stirring, thereby forming a SiO₂ sol, (2) adding an aqueous solution containing an alkali metal source to the resulting hydrolyzed solution, (3) adding an aqueous solution containing a crystallizing agent to an aqueous solution containing an alumina source with stirring and (4) adding the solution prepared in (3) to the solution prepared in (2), followed by stirring at room temperature for about 6 to about 24 hours.

## Patentansprüche

1. Verfahren zur Herstellung einer Gastrennmembran, das das hermetisch abgeschlossene Einbringen einer wässrigen Mischung aus einem SiO₂-Sol als Siliciumoxidquelle, die hergestellt wird durch Hydrolyse von Tetraniederalkoxysilan in Gegenwart eines sauren Katalysators, einer Aluminiumoxidquelle, einer Alkalimetallquelle und eines Tetrapropylammoniumsalzes als Kristallisationsmittel zusammen mit einem porösen anorganischen Substrat in einem Druckkessel, und Halten des Druckkessels bei einer hydrothermalen Synthesetemperatur von 160 bis 200°C, umfasst, wodurch eine Schicht aus synthetischem Zeolith ZSM-5 auf dem porösen anorganischen Substrat gebildet wird.

2. Verfahren gemäß Anspruch 1, worin die Aluminiumoxidquelle Natriumaluminat, Aluminiumnitrat, Aluminiumsulfat oder Aluminiumoxidpulver ist.

3. Verfahren gemäß Anspruch 1, worin die Alkalimetallquelle ein Alkalimetallhydroxid ist.

4. Verfahren gemäß Anspruch 1, worin das Kristallisationsmittel ein Tetrapropylammoniumsalz oder Tetrapropylammoniumhydroxid ist.

5. Verfahren gemäß Anspruch 1, worin sowohl als Aluminiumoxidquelle wie auch als Alkalimetallquelle Natriumaluminat verwendet wird.

6. Verfahren gemäß Anspruch 1, worin die wäßrige Mischung in molaren Einheiten die folgende Zusammensetzung aufweist:
SiO₂/Al₂O₃ = etwa 30 ∼ etwa 1.000
Na₂O/SiO₂ = etwa 0,1 ∼ etwa 1,0
Kristallisationsmittel/SiO₂ = etwa 0,05 ∼ etwa 0,5
H₂O/SiO₂ = etwa 70 ∼ etwa 400.

7. Verfahren gemäß Anspruch 1, worin die wäßrige Mischung in molaren Einheiten die folgende Zusammensetzung aufweist:
SiO₂/Al₂O3 = etwa 60 ∼ etwa 400
Na₂O/SiO₂ = etwa 0,2 ∼ etwa 0,5
Kristallisationsmittel/SiO₂ = 0,05 ∼ etwa 0,2
H₂O/SiO₂ = etwa 80 ∼ etwa 300.

8. Verfahren gemäß Anspruch 1, worin die wäßrige Mischung eine Mischung ist, die hergestellt wird durch
(1) Zugabe von Tetra(niederalkoxy)silan zu einer wäßrigen Lösung, die einen sauren Katalysator enthält, wodurch unter Rühren die Hydrolysereaktion durchgeführt wird, wodurch ein SiO₂-Sol gebildet wird, (2) Zugabe einer wäßrigen Lösung, die eine Alkalimetallquelle enthält, zu der resultierenden hydrolysierten Lösung, (3) Zugabe einer wäßrigen Lösung, die ein Kristallisationsmittel enthält, zu einer wäßrigen Lösung, die eine Aluminiumoxidquelle enthält, unter Rühren, und (4) Zugabe der Lösung, die in (3) hergestellt wurde, zu der Lösung, die in (2) hergestellt wurde, gefolgt von ungefähr 6- bis ungefähr 24-stündigem Rühren bei Raumtemperatur.

## Revendications

1. Procédé pour la production d'une membrane de séparation de gaz, qui comporte les opérations consistant à placer hermétiquement dans un récipient sous pression un mélange aqueux d'un sol de Si0₂ en tant que source de silice, préparé par hydrolyse de tétra(alcoxy inférieur)silane en présence d'un catalyseur acide, d'une source d'alumine, d'une source de métal alcalin et d'un sel de tétrapropylammonium comme agent de cristallisation, en même temps qu'un support inorganique poreux, et à maintenir le récipient sous pression à une température de synthèse hydrothermique de 160 à 200° C, pour ainsi former une couche de zéolithe synthétique ZSM-5 sur le support inorganique poreux.

2. Procédé selon la revendication 1, dans lequel la source d'alumine est l'aluminate de sodium, le nitrate d'aluminium, le sulfate d'aluminium ou une poudre d'alumine.

3. Procédé selon la revendication 1, dans lequel la source de métal alcalin est un hydroxyde de métal alcalin.

4. Procédé selon la revendication 1, dans lequel l'agent de cristallisation est un sel de tétrapropylammonium ou un hydroxyde de tétrapropylammonium.

5. Procédé selon la revendication 1, dans lequel l'aluminate de sodium est utilisé à la fois comme source d'alumine et comme source de métal alcalin.

6. Procédé selon la revendication 1, dans lequel le mélange aqueux présente la composition ci-dessous en proportions molaires:
SiO₂/Al₂O3 = environ 30 ∼ environ 1000
Na₂O/SiO₂ = environ 0,1 ∼ environ 1,0
Agent de cristallisation/SiO₂ = env. 0,05 ∼ env. 0,5
H₂O/SiO₂ = environ 70 ∼ environ 400

7. Procédé selon la revendication 1, dans lequel le mélange aqueux présente la composition ci-dessous en proportions molaires:
SiO₂/Al₂O₃ = environ 60 ∼ environ 400
Na₂O/SiO₂ = environ 0,2 ∼ environ 0,5
Agent de cristallisation/SiO₂ = env. 0,05 ∼ env. 0,2
H₂O/SiO₂ = environ 80 ∼ environ 300

8. Procédé selon la revendication 1, dans lequel le mélange aqueux est un mélange préparé (1) en ajoutant un tétra(alcoxy inférieur)silane à une solution aqueuse contenant un catalyseur acide, pour conduire une réaction d'hydrolyse sous agitation, formant ainsi un sol de SiO₂, (2) en ajoutant une solution aqueuse contenant une source de métal alcalin à la solution hydrolysée ainsi obtenue, (3) en ajoutant sous agitation une solution aqueuse contenant un agent de cristallisation à une solution aqueuse contenant une source d'alumine, et (4) en ajoutant la solution préparée en (3) à la solution préparée en (2), puis en agitant à température ambiante pendant environ 6 à environ 24 heures.
